# EUROPEAN PATENT SPECIFICATION

(11) **EP 3 431 540 B1**
(45) Date of publication and mention of the grant of the patent: **28.10.2020**
(21) Application number: 17861207.3
(22) Date of filing: 07.06.2017
(51) Int. Cl.: C08K 5/5313, C08K 3/22, C08K 3/26, C08K 5/098

(54) **ADDITIVE FOR POLYMER AND PREPARATION METHOD THEREFOR**
ADDITIV FÜR POLYMER UND HERSTELLUNGSVERFAHREN DAFÜR
ADDITIF POUR POLYMÈRE ET PROCÉDÉ DE PRÉPARATION ASSOCIÉ

(30) Priority: 23.05.2017 CN 201710367811
(43) Date of publication of application: 23.01.2019
(73) Proprietor: Guangzhou Platinum Barium Information Technology Co., Ltd., Guangzhou, Guangdong 510032 (CN)
(72) Inventor: TU, Zhixiu, Guangzhou Guangdong 510032 (CN)
(74) Representative: Algemeen Octrooi- en Merkenbureau B.V.
(86) International application number: PCT/CN2017/087391
(87) International publication number: WO 2018/214178

(56) References cited:
- CN-A- 101 891 953
- CN-A- 101 906 117
- CN-A- 102 388 095
- CN-A- 105 367 823
- JP-A- 2016 053 116
- US-A1- 2011 266 024

## Description

### TECHNICAL FIELD

The present invention relates to an additive for polymer, and specifically relates to a dialkyl phosphinate that contains traces of a metal element of calcium and a preparation method thereof.

### BACKGROUND

A dialkyl phosphinate is widely used as a fire retardant. It is known that the dialkyl phosphinate can be synthesized by different methods. For example, the patent DE4430932 discloses that a metal salt of a di-substituted phosphinic acid is used as a fire retardant in polyester, and two patents DE19910232 and US6248921 disclose a preparation method of a metal salt of a di-substituted phosphinic acid. The American patent US6359171B1 discloses a preparation method of an aluminum dialkyl phosphinate, in the method a monoalkyl phosphinate is firstly synthesized by using a yellow phosphorus, and then a vinylation is triggered by using a free radical, followed by hydrolyzing to obtain an acid, and then the acid reacts with an aluminum salt to obtain a fire retardant, the aluminum dialkyl phosphinate.

A thermoplastic plastic is widely used in industries such as electrical and electronic, automobile, construction and the like for its excellent electric performance and processing performance. In order to meet the requirements of the industries for fire retarding and pro-environment, a halogen-free fire retardant is usually added into the thermoplastic plastic to meet the above-described requirements of the material.

The dialkyl phosphinate, as a high-efficient halogen-free fire retardant, has characteristics of a high bulk density, a low dosage of the fire retardant, a good mechanical performance, a good color and lustre, a low smoke density and a high CTI (comparative tracing index) value, and the dialkyl phosphinate is widely used in the thermoplastic plastic and a thermosetting plastic, such as a polyamide, a polyester, an unsaturated resin, an epoxy resin, a polyurethane and the like.

According to the present invention, it is accidentally found in the research that when the fire retardant, which is the dialkyl phosphinate, contains traces of metal element of calcium, not only a relatively high fire retarding performance of a polymer composition can be guaranteed, but also a fatigue resistance of a product of the polymer composition can be significantly improved.

### SUMMARY OF THE INVENTION

An object of the present invention is to provide a polymer material containing an additive for a polymer. By adding traces of metal element of calcium into a dialkyl phosphinate, the additive enables an obtained polymer composition to have an excellent fire retarding performance, and also enables the polymer composition to have an excellent fatigue resistance.

Another object of the present invention is to provide a preparation method of the above-described polymer material.

The present invention is achieved by following technical solution:
A polymer material containing an additive for a polymer according to claim 1, wherein the polymer is selected from the group of polyester, PA6, PA66, TPU and PPE, wherein the additive comprises:
A: a dialkyl phosphinate, which has a following structural formula (I), 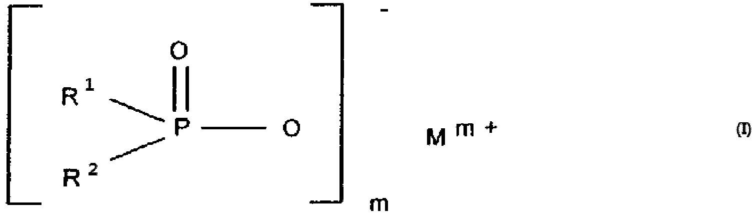
   wherein R¹ and R² are the same or different, which represent H, C1-C6-alkyl or C6-C18-aryl, preferably R¹ and R² are selected from a group consisting of ethyl, propyl, butyl, hexyl and cyclohexyl;
   M is Al; m is 3; and
B: a metal element of calcium, wherein the mass content of the metal element of calcium in a total additive is 50 to 500 ppm, preferably the mass content is 100 to 400 ppm, and further preferably the mass content is 150 to 300 ppm, and comprising 5 to 25 parts by weight of the additive for polymer and 50 to 75 parts by weight of the polymer or a mixture thereof.

The test method of the mass content of the metal element of calcium is as follows: taking 0.05±0.005 g of a sample of the additive for polymer, which is accurate to 0.001 g, putting the sample into a microwave digestion tank, and then adding 10 mL of a digestive acid into the microwave digestion tank to make the digestive acid totally immerse the sample, slowly dropping 1 to 2 mL of hydrogen peroxide into the microwave digestion tank, making the sample react with the digestive acid for 1 to 2 minutes, placing a lid on to seal the digestion tank, performing a digestion in a forced-air oven of 220 °C for a digesting time of 2 hours, after the digestion is finished, taking out the digestion tank, cooling the digestion tank to a room temperature, and keeping the sample for testing; if there still a portion of particles haven't been digested, slowly dropping 1 to 2 mL of hydrogen peroxide again into the microwave digestion tank and repeating the previous digestion steps, keeping the sample for testing; if the sample hasn't been totally digested after performing the digestion twice, a clear solution obtained from a filtered digestive solution is required to be taken as a sample to be tested, specifically, transferring the solution in the microwave digestion tank into a volumetric flask by using a filtering membrane of 0.45 µm, washing the microwave digestion tank with a defined amount of distilled water for several times and transferring a washing fluid into the volumetric flask, and then diluting the solution with the distilled water until a scale line of 50 mL is reached, shaking the volumetric flask to make the solution uniform, and keeping the solution for testing; analyzing the mass content of the metal element of calcium contained in the sample to be tested by using a full-automatic inductive coupling plasma atomic emission spectrometer of a type 720ES of Agilent company, and taking an average value of three test values as a final result.

The metal element of calcium is derived from a calcium-containing compound, and the calcium-containing compound is selected from one or more of calcium oxide, calcium carbonate, calcium sulfate whisker, calcium stearate and calcium montanate. A source of the metal element of calcium that is pointed out in the present invention is not limited to the above-described examples. The metal element of calcium can be tested by an atomic emission spectrometry method, no matter what type of the calcium-containing compound is used. The mass content of the metal element of calcium should be based on the calcium element itself but not the calcium-containing compound to which the metal element of calcium is added. The mass content of the metal element of calcium which is represented by ppm is counted based on a total mass of the additive for polymer in the present invention.

The polymer is selected from a group consisting of a polyester (such as PBT and PET), a nylon (PA6, PA66 and the like), PPE, TPE, and TPU, preferably a nylon 6.

The additive for polymer is obtained by uniformly blending a dialkyl phosphinate and the calcium-containing compound in a high-speed mixer in the present invention.

Particularly, the calcium-containing compound is selected from one or more of calcium oxide, calcium carbonate, calcium sulfate whisker, calcium stearate and calcium montanate.

The present invention also discloses a use of the above-described additive for polymer as a fire retardant according to claim 8, and a method for improving fatigue resistance of a polymer material according to claim 9.

The polymer is selected from the group consisting of the polyester (PBT and PET), the nylon (PA6, PA66 and the like), PPE, TPE, TPU and the epoxy resin, preferably the nylon 6.

According to different performance requirements of the material, different aids can be added into the polymer material according to the present invention which for example further comprises 15 to 40 parts by weight of a filler and 0.1 to 5 parts by weight of the aids.

The filler of the present invention is a substance generally used to reinforce or fill the polymer, and a mixture of two or more inorganic fillers and/or a fortifier can also be used, preferably a glass fiber.

The aid can be an extra component that doesn't interfere the above-described desired properties while improves other beneficial properties, such as an antioxidant, a lubricant, a release agent, a nucleating agent, a colorant, and a light stabilizer.

Compared with the prior art, the present invention has following beneficial effects:
1) The dialkyl phosphinate prepared in the present invention, which contains a specific range of content of the metal element of calcium, serves as the additive for polymer. By using the additive in the polymer, not only a relatively high fire retarding performance of a polymer composition can be guaranteed, but also a fatigue resistance of a product of the polymer composition can be greatly improved.
2) The additive for polymer in the present invention has a simple preparation process and a low production cost, and is convenient for a mass production.

### DETAILED DESCRIPTION OF THE PREFERRED EMBODIMENT

The present invention is further described in detail by specific implementations below.

Raw materials selected to be used in the embodiments and comparative examples are described below:
A component A aluminum dialkyl phosphinate: commercially available; a content of a metal element of calcium: not detected;
PA6: PA6 M2000 (Guangdong Xinhui Meida Nylon Co., Ltd.);
A glass fiber: ESC301-HP (Chongqing Polycomp International Corporation);
An antioxidant: 1010 (Jinhai Albemarle);
A calcium-containing compound used in the embodiments and comparative examples of the present invention is commercially available.

A test method of the mass content of the metal element of calcium in the present invention was as follows: 0.05±0.005 g of a sample of the additive for polymer was taken, which was accurate to 0.001 g, the sample was put into a microwave digestion tank, and then 10 mL of a digestive acid was added into the microwave digestion tank to make the digestive acid totally immerse the sample, 1 to 2 mL of a hydrogen peroxide was slowly dropped into the microwave digestion tank, the sample was made react with the digestive acid for 1 to 2 minutes, a lid was placed on to seal the digestion tank, a digestion was performed in a forced-air oven of 220 °C for a digesting time of 2 hours, after the digestion was finished, the digestion tank was taken out and was cooled to a room temperature, and the sample was kept for testing; if there still a portion of particles hadn't been digested, 1 to 2 mL of hydrogen peroxide was slowly dropped again into the microwave digestion tank and the previous digestion steps were repeated, and the sample was kept for testing; if the sample hadn't been totally digested after the digestion was performed twice, a clear solution which was obtained from a filtered digestive solution was required to be taken as a sample to be tested, specifically, the solution in the microwave digestion tank was transferred into a volumetric flask by using a filtering membrane of 0.45 µm, the microwave digestion tank was washed with a defined amount of a distilled water for several times and a washing fluid was transferred into the volumetric flask, and then the solution was diluted with the distilled water until a scale line of 50 mL was reached, the volumetric flask was shaken to make the solution uniform, and the solution was kept for testing; the mass content of the metal element of calcium contained in the sample to be tested was analyzed by using a full-automatic inductive coupling plasma atomic emission spectrometer of a type 720ES of Agilent company, and an average value of three test values was taken as a final result.

A test method of a fatigue resistance of a product of a polymer composition according to the present invention: an apparatus CTMTronic 2000 of Dyna Mess company was used, according to DIN53442 and ISO0178, and number of rounds that the product experienced was calibrated with reference to under an initial bending stress of about 50 MPa until it was broken off.

A burning performance of the present invention: a test of UL94 plastic burning performance.

With respect to a test sample of each polymer composition, the test sample with a thickness of 1.5 mm was used to test the UL94 burning rating. The burning ratings specified in UL94 are as below:
V-0: after a test specimen is away from a flame, a continuous burning time isn't longer than 10 seconds, a total continuous burning time of five test specimens for total 10 flame applications doesn't exceed 50 seconds, no molten drop drops, no phenomenon of flame spreading to a fixture exist, after the burning is finished, burning time of an afterglow of the test specimen isn't longer than 30 seconds.
V-1: after the test specimen is away from the flame, the continuous burning time isn't longer than 30 seconds, the total continuous burning time of the five test specimens for total 10 flame applications doesn't exceed 250 seconds, after the burning is finished, the burning time of the afterglow of the test specimen isn't longer than 60 seconds, and other standards are the same as V-0.
V-2: after the test specimen is away from the flame, the molten drop appears during the continuous burning process, the molten drop will ignite an absorbent cotton which is an indicator, and other standards are the same as V-1.

Unclassifiable (ncl): for the case that can't meet the requirements of rating V-2.

### Comparative Examples 1-2 (D1-D2) and Embodiments 1-11 (B1-B11)

The above-described prepared component A and a calcium-containing compound were weighed according to the constitution shown in Table 1, and were blended to be uniform in a high-speed mixer, to prepare an additive for polymer according to the present invention.

Particularly, a content of a metal element of calcium of the additive for polymer according to the present invention was adjusted and tested by an actual addition amount of the calcium-containing compound.

**Table 1 The additive for polymer of the comparative examples 1-2 (D1-D2) and the embodiments 1-11 (B1-B11)**

| | D1 | D2 | B1 | B2 | B3 | B4 | B5 | B6 | B7 | B8 | B9 | B10 | B11 |
|---|---|---|---|---|---|---|---|---|---|---|---|---|---|
| Component A | | | | | | | | | | | | | |
| calcium-containing compound | calcium oxide | calcium carbonate | calcium sulfate whisker | calcium stearate | calcium oxide | calcium carbonate | calcium sulfate whisker | calcium stearate | calcium oxide | calcium carbonate | calcium sulfate whisker | calcium stearate | calcium carbonate |
| content of calcium element (ppm) | 5 | 780 | 155 | 289 | 220 | 275 | 115 | 386 | 58 | 491 | 15 | 585 | 220 |

Each component was weighed according to a proportion in Table 2, after the components were blended to be uniform in a high-speed stirring mixer, the components were put into a twin-screw extruder. A glass fiber was added through a side feed system of the twin-screw extruder, after melting extruding by the twin-screw extruder, cooling in a water bath and granulating, a polymer composition was obtained. And then a UL-94 fire retarding rating of the polymer composition and a fatigue resistance of a product of the polymer composition were tested. The specific test data is listed in Table 2.

**Table 2 Specific proportions (parts by weight) and test results of each component of the comparative examples 3-5 and the embodiments 12-22**

| | comparative example 3 | comparative example 4 | comparative example 5 | embodiment 12 | embodiment 13 | embodiment 14 | embodiment 15 | embodiment 16 | embodiment 17 | embodiment 18 | embodiment 19 | embodiment 20 | embodiment 21 | embodiment 22 |
|---|---|---|---|---|---|---|---|---|---|---|---|---|---|---|
| PA6 | 60 | 60 | 60 | 60 | 60 | 60 | 60 | 60 | 60 | 60 | 60 | 60 | 60 | 60 |
| glass fiber | 20 | 20 | 20 | 20 | 20 | 20 | 20 | 20 | 20 | 20 | 20 | 20 | 20 | 20 |
| antioxidant 1010 | 1 | 1 | 1 | 1 | 1 | 1 | 1 | 1 | 1 | 1 | 1 | 1 | 1 | 1 |
| component A | 19 | | | | | | | | | | | | | |
| D1 | | 19 | | | | | | | | | | | | |
| D2 | | | 19 | | | | | | | | | | | |
| B1 | | | | 19 | | | | | | | | | | |
| B2 | | | | | 19 | | | | | | | | | |
| B3 | | | | | | 19 | | | | | | | | |
| B4 | | | | | | | 19 | | | | | | | |
| B5 | | | | | | | | 19 | | | | | | |
| B6 | | | | | | | | | 19 | | | | | |
| B7 | | | | | | | | | | 19 | | | | |
| B8 | | | | | | | | | | | 19 | | | |
| B9 | | | | | | | | | | | | 19 | | |
| B10 | | | | | | | | | | | | | 19 | |
| B11 | | | | | | | | | | | | | | 19 |
| fire retarding performance (1.5 mm) | V-0 | V-0 | V-0 | V-0 | V-0 | V-0 | V-0 | V-0 | V-0 | V-0 | V-0 | V-0 | V-0 | V-0 |
| fatigue resistance of product (1000 rounds) | 255 | 268 | 270 | 335 | 340 | 338 | 336 | 323 | 325 | 314 | 316 | 307 | 306 | 338 |

Embodiments 20 and 21 are reference embodiments.

## Claims

1. A polymer material containing an additive for a polymer, wherein the polymer is selected from the group of polyester, PA6, PA66, TPU and PPE, wherein the additive comprises:
A: a dialkyl phosphinate, the dialkyl phosphinate having the following structural formula (I), 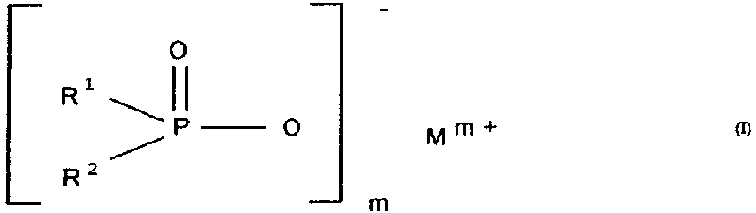
wherein R¹ and R² are the same or different, which represent H, C1-C6-alkyl or
C6-C18-aryl;
M is Al; m is 3;
B: a metal element of calcium wherein the mass content of the metal element of calcium in the total additive is 50 to 500 ppm which is determined according to the method of the description; and comprising 5 to 25 parts by weight of the additive for polymer and 50 to 75 parts by weight of the polymer or a mixture thereof.

2. The polymer material according to claim 1, wherein the polymer is nylon 6 (PA6).

3. The polymer material according to claim 2, wherein the polymer material further comprises 15 to 40 parts by weight of a filler and 0.1 to 5 parts by weight of an aid.

4. The polymer material according to any one of claims 1 - 3, wherein the mass content of the metal element of calcium is 100 to 400 ppm, preferably wherein the mass content is 150 to 300 ppm.

5. The polymer material according to any one of claims 1 - 4, wherein R¹ and R² represents ethyl, propyl, butyl, hexyl and cyclohexyl.

6. The polymer material according to any one of claims 1 - 5, wherein the metal element of calcium is derived from a calcium-containing compound, and the calcium-containing compound is selected from one or more of calcium oxide, calcium carbonate, calcium sulfate whisker, calcium stearate and calcium montanate.

7. The polymer material according to any one of claims 1 - 6, wherein the mass content of the metal element of calcium in the additive for he polymer is determined using the following steps: taking 0.05±0.005 g of a sample of the additive for polymer, which is accurate to 0.001 g, putting the sample into a microwave digestion tank, and then adding 10 mL of a digestive acid into the microwave digestion tank to make the digestive acid totally immerse the sample, slowly dropping 1 to 2 mL of hydrogen peroxide into the microwave digestion tank, making the sample react with the digestive acid for 1 to 2 minutes, placing a lid on to seal the digestion tank, performing a digestion in a forced-air oven of 220 °C for a digesting time of 2 hours, after the digestion is finished, taking out the digestion tank, cooling the digestion tank to a room temperature, and keeping the sample for testing; if there still a portion of particles haven't been digested, slowly dropping 1 to 2 mL of hydrogen peroxide again into the microwave digestion tank and repeating the previous digestion steps, keeping the sample for testing; if the sample hasn't been totally digested after performing the digestion twice, a clear solution that is obtained from a filtered digestive solution is required to be taken as a sample to be tested, specifically, transferring the solution in the microwave digestion tank into a volumetric flask by using a filtering membrane of 0.45 µm, washing the microwave digestion tank with a defined amount of distilled water for several times and transferring a washing fluid into the volumetric flask, and then diluting the solution with the distilled water until a scale line of 50 mL is reached, shaking the volumetric flask to make the solution uniform, and keeping the solution for testing; analyzing the mass content of the metal element of calcium contained in the sample to be tested by using a full-automatic inductive coupling plasma atomic emission spectrometer of a type 720ES of Agilent company, and taking an average value of three test values as a final result.

8. Use of an additive for a polymer as a fire retardant, wherein the polymer is selected from the group consisting of polyester, PA6, PA66, TPU and PPE, and wherein the additive comprises:
A: a dialkyl phosphinate, the dialkyl phosphinate having the following structural formula (I), 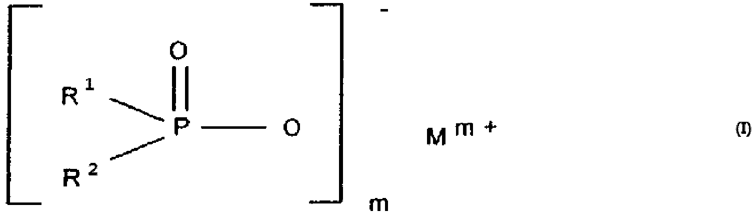
wherein R¹ and R² are the same or different, which represent H, C1-C6-alkyl or
C6-C18-aryl;
M is Al; m is 3; and
B: a metal element of calcium, wherein a mass content of the metal element of calcium in a total additive is 50 to 500 ppm.

9. A method for improving fatigue resistance of a polymer material, the method comprising mixing 5 to 25 parts by weight of an additive for a polymer and 50 to 75 parts by weight of a polymer selected from the group consisting of polyester, PA6, PA66, TPU and PPE or a mixture thereof, wherein the additive for a polymer comprises:
A: a dialkyl phosphinate, the dialkyl phosphinate having the following structural formula (I), 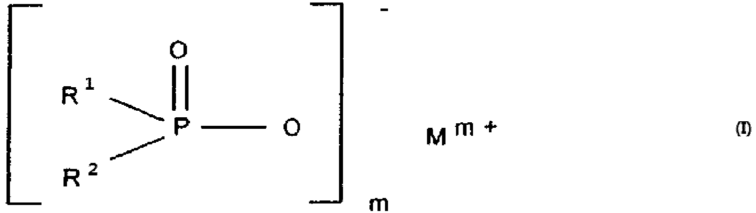
wherein R¹ and R² are the same or different, which represent H, C1-C6-alkyl or
C6-C18-aryl;
M is Al; m is 3; and
B: a metal element of calcium, wherein a mass content of the metal element of calcium in a total additive is 50 to 500 ppm,
wherein the fatigue resistance is determined according to the method of the description.

## Patentansprüche

1. Polymermaterial, das einen Zusatzstoff für ein Polymer enthält, wobei das Polymer ausgewählt ist aus der Gruppe von Polyester, PA6, PA66, TPU und PPE, wobei der Zusatzstoff umfasst:
A: ein Dialkylphosphinat, wobei das Dialkylphosphinat die folgende Strukturformel (I) aufweist, 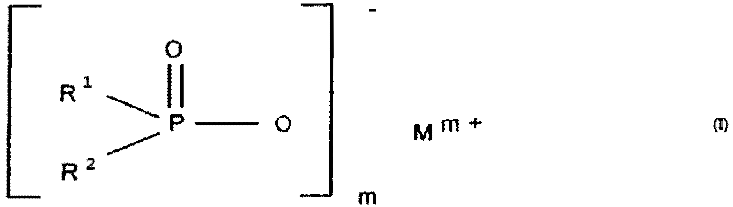
wobei R¹ und R², die gleich oder verschieden sind, H, C1-C6-Alkyl oder C6-C18-Aryl darstellen;
M Al ist; m 3 ist;
B: ein Metallelement aus Calcium, wobei der Massegehalt des Metallelements aus Calcium in dem gesamten Zusatzstoff 50 bis 500 ppm, bestimmt gemäß dem Verfahren in der Beschreibung, beträgt; und
umfassend 5 bis 25 Gewichtsteile an dem Zusatzstoff für Polymer und 50 bis 75 Gewichtsteile an dem Polymer oder einem Gemisch davon.

2. Polymermaterial gemäß Anspruch 1, wobei das Polymer Nylon 6 (PA6) ist.

3. Polymermaterial gemäß Anspruch 2, wobei das Polymermaterial ferner 15 bis 40 Gewichtsteile an einem Füllstoff und 0,1 bis 5 Gewichtsteile an einem Hilfsstoff umfasst.

4. Polymermaterial gemäß einem der Ansprüche 1-3, wobei der Massegehalt an dem Metallelement aus Calcium 100 bis 400 ppm beträgt, wobei der Massegehalt vorzugsweise 150 bis 300 ppm beträgt.

5. Polymermaterial gemäß einem der Ansprüche 1-4, wobei R¹ und R² Ethyl, Propyl, Butyl, Hexyl und Cyclohexyl darstellen.

6. Polymermaterial gemäß einem der Ansprüche 1-5, wobei das Metallelement aus Calcium von einer calciumhaltigen Verbindung abgeleitet ist und die calciumhaltige Verbindung ausgewählt ist aus einem oder mehreren von Calciumoxid, Calciumcarbonat, Calciumsulfat-Whisker, Calciumstearat und Calciummontanat.

7. Polymermaterial gemäß einem der Ansprüche 1-6, wobei der Massegehalt des Metallelements aus Calcium in dem Zusatzstoff für das Polymer unter Verwendung der folgenden Schritte bestimmt wird: Nehmen von 0,05 ± 0,005 g einer Probe des Zusatzstoffs für Polymer, die auf 0,001 g genau ist, Platzieren der Probe in einem Mikrowellenaufschlusstank und dann Zugeben von 10 ml einer Aufschlusssäure in den Mikrowellenaufschlusstank, so dass die Probe vollständig in der Aufschlusssäure eingetaucht ist, langsames Zutropfen von 1 bis 2 ml Wasserstoffperoxid in den Mikrowellenaufschlusstank, Umsetzen der Probe mit der Aufschlusssäure für 1 bis 2 Minuten, Anordnen eines Deckels zum Verschließen des Aufschlusstanks, Durchführen eines Aufschlusses in einem Gebläseofen mit 220 °C für eine Aufschlusszeit von 2 Stunden, nach dem Abschluss des Aufschlusses Entnehmen aus dem Aufschlusstank, Abkühlen des Aufschlusstanks auf Raumtemperatur und Aufbewahren der Probe zur Prüfung; wenn ein Teil der Partikel noch nicht aufgeschlossen worden ist, abermals langsames Zutropfen von 1 bis 2 ml Wasserstoffperoxid in den Mikrowellenaufschlusstank, und Wiederholen der vorausgegangenen Aufschlussschritte, Aufbewahren der Probe zur Prüfung; wenn die Probe nach zweimaliger Durchführung des Aufschlusses nicht vollständig aufgeschlossen worden ist, muss eine klare Lösung, die aus einer filtrierten Aufschlusslösung erhalten wird, als zu prüfende Probe genommen werden, insbesondere Überführen der Lösung in dem Mikrowellenaufschlusstank in einen Messkolben unter Verwendung einer Filtermembran von 0,45 µm, mehrmaliges Waschen des Mikrowellenaufschlusstanks mit einer definierten Menge an destilliertem Wasser und Überführen eines Waschfluids in den Messkolben und dann Verdünnen der Lösung mit dem destillierten Wasser, bis eine Messlinie von 50 ml erreicht ist, Schütteln des Messkolbens, um die Lösung gleichmäßig zu machen, und Aufbewahren der Lösung zur Prüfung; Analysieren des in der zu prüfenden Probe enthaltenen Massegehalts des Metallelements aus Calcium unter Verwendung eines vollautomatischen Induktiv-gekoppeltes-Plasma-Atomemissionsspektrometers des Typs 720ES der Agilent Company und Nehmen des Mittelwerts von drei Prüfwerten als Endergebnis.

8. Verwendung eines Zusatzstoffs für ein Polymer als Flammhemmer, wobei das Polymer ausgewählt ist aus der Gruppe bestehend aus Polyester, PA6, PA66, TPU und PPE, und wobei der Zusatzstoff umfasst:
A: ein Dialkylphosphinat, wobei das Dialkylphosphinat die folgende Strukturformel (I) aufweist, 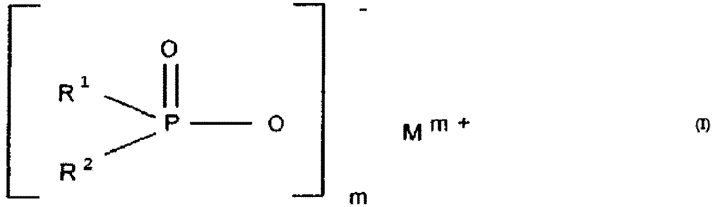
wobei R¹ und R², die gleich oder verschieden sind, H, C1-C6-Alkyl oder C6-C18-Aryl darstellen;
M Al ist; m 3 ist; und
B: ein Metallelement aus Calcium, wobei der Massegehalt des Metallelements aus Calcium in dem gesamten Zusatzstoff 50 bis 500 ppm beträgt.

9. Verfahren zum Verbessern der Ermüdungsbeständigkeit eines Polymermaterials, wobei das Verfahren Mischen von 5 bis 25 Gewichtsteilen an einem Zusatzstoff für ein Polymer und 50 bis 75 Gewichtsteilen an einem Polymer ausgewählt aus der Gruppe bestehend aus Polyester, PA6, PA66, TPU und PPE oder einem Gemisch davon, wobei der Zusatzstoff für ein Polymer umfasst:
A: ein Dialkylphosphinat, wobei das Dialkylphosphinat die folgende Strukturformel (I) aufweist, 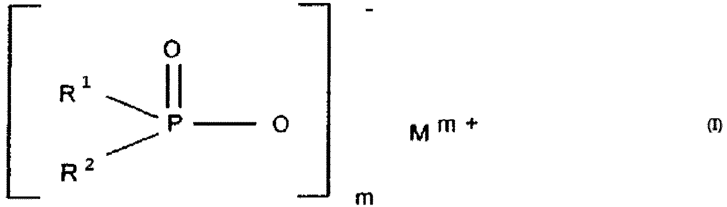
wobei R¹ und R², die gleich oder verschieden sind, H, C1-C6-Alkyl oder C6-C18-Aryl darstellen;
M Al ist; m 3 ist; und
B: ein Metallelement aus Calcium, wobei der Massegehalt des Metallelements aus Calcium in dem gesamten Zusatzstoff 50 bis 500 ppm beträgt,
wobei die Ermüdungsbeständigkeit gemäß dem Verfahren in der Beschreibung bestimmt wird.

## Revendications

1. Matériau polymère contenant un additif pour un polymère, dans lequel le polymère est choisi parmi le polyester, PA6, PA66, TPU et PPE, dans lequel l'additif comprend :
A : un phosphinate de dialkyle, le phosphinate de dialkyle ayant la formule structurelle (I) suivante, 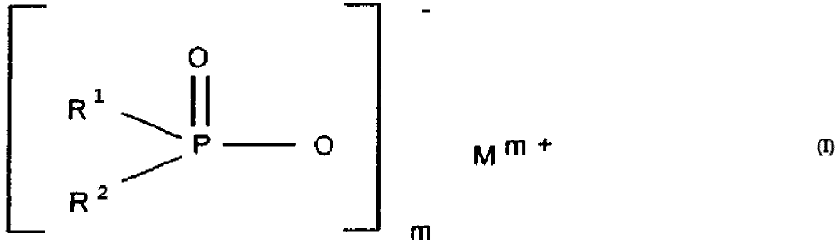
où R¹ et R² sont identiques ou différents, qui représentent H, un alkyle en C1 à C6 ou un aryle en C6 à C18 ;
M représente Al ; m vaut 3 ;
B : un élément métallique calcium dans lequel la teneur massique de l'élément métallique calcium dans l'additif total est de 50 à 500 ppm qui est déterminée selon le procédé de la description ; et
comprenant 5 à 25 parties en poids de l'additif pour polymère et 50 à 75 parties en poids du polymère ou un mélange de ceux-ci.

2. Matériau polymère selon la revendication 1, dans lequel le polymère est le nylon 6 (PA6).

3. Matériau polymère selon la revendication 2, dans lequel le matériau polymère comprend en outre 15 à 40 parties en poids d'une charge et 0,1 à 5 parties en poids d'un adjuvant.

4. Matériau polymère selon l'une quelconque des revendications 1 à 3, dans lequel la teneur massique de l'élément métallique calcium est de 100 à 400 ppm, de préférence dans lequel la teneur massique est de 150 à 300 ppm.

5. Matériau polymère selon l'une quelconque des revendications 1 à 4, dans lequel R¹ et R² représentent un éthyle, un propyle, un butyle, un hexyle et un cyclohexyle.

6. Matériau polymère selon l'une quelconque des revendications 1 à 5, dans lequel l'élément métallique calcium est dérivé d'un composé contenant du calcium, et le composé contenant du calcium est choisi parmi un ou plusieurs de l'oxyde de calcium, du carbonate de calcium, de la trichite de sulfate de calcium, du stéarate de calcium et du montanate de calcium.

7. Matériau polymère selon l'une quelconque des revendications 1 à 6, dans lequel la teneur massique de l'élément métallique calcium dans l'additif pour le polymère est déterminée en utilisant les étapes suivantes : prélever 0,05 ± 0,005 g d'un échantillon de l'additif pour polymère, avec une précision de 0,001 g, à mettre l'échantillon dans une cuve de digestion à micro-ondes, puis ajouter 10 ml d'un acide digestif dans la cuve de digestion à micro-ondes pour amener l'acide digestif à immerger totalement l'échantillon, introduire goutte à goutte lentement 1 à 2 ml de peroxyde d'hydrogène dans la cuve de digestion à micro-ondes, faire réagir l'échantillon avec l'acide digestif pendant 1 à 2 minute(s), placer un couvercle pour sceller la cuve de digestion, à effectuer une digestion dans un four à air forcé de 220°C pendant un temps de digestion de 2 heures, une fois la digestion terminée, retirer la cuve de digestion, refroidir la cuve de digestion à température ambiante et conserver l'échantillon pour le test ; s'il y a encore une partie de particules qui n'a pas été digérée, introduire goutte à goutte lentement 1 à 2 ml de peroxyde d'hydrogène à nouveau dans la cuve de digestion à micro-ondes et répéter les étapes de digestion précédentes, à conserver l'échantillon pour le test ; si l'échantillon n'a pas été totalement digéré après avoir effectué la digestion deux fois, une solution limpide obtenue à partir d'une solution digestive filtrée doit être prélevée comme échantillon à tester, en particulier, transférer la solution dans la cuve de digestion à micro-ondes dans une fiole jaugée en utilisant une membrane filtrante de 0,45 µm, laver la cuve de digestion à micro-ondes avec une quantité définie d'eau distillée plusieurs fois et à transférer un fluide de lavage dans la fiole jaugée, puis diluer la solution avec l'eau distillée jusqu'à ce qu'une ligne de graduation de 50 ml soit atteinte, secouer la fiole jaugée pour rendre la solution uniforme et à conserver la solution pour le test ; analyser la teneur massique de l'élément métallique calcium contenu dans l'échantillon à tester en utilisant un spectromètre d'émission atomique à plasma à couplage inductif totalement automatique du type 720ES de la société Agilent, et prendre une valeur moyenne de trois valeurs de test comme résultat final.

8. Utilisation d'un additif pour un polymère comme agent ignifuge, dans laquelle le polymère est choisi parmi e polyester, PA6, PA66, TPU et PPE, et dans laquelle l'additif comprend :
A : un phosphinate de dialkyle, le phosphinate de dialkyle ayant la formule structurelle (I) suivante, 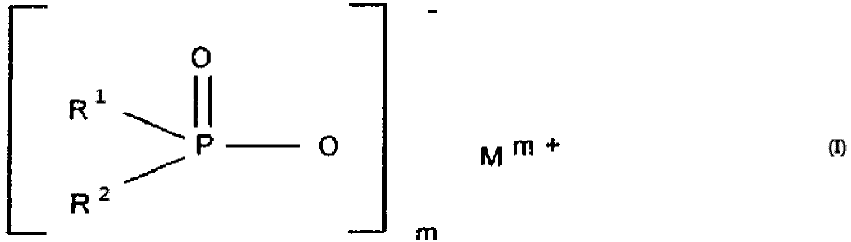
où R¹ et R² sont identiques ou différents, qui représentent H, un alkyle en C1 à C6 ou un aryle en C6 à C18 ;
M représente Al ; m vaut 3 ; et
B : un élément métallique calcium, où une teneur massique de l'élément métallique calcium dans un additif total est de 50 à 500 ppm.

9. Procédé pour améliorer la résistance à la fatigue d'un matériau polymère, le procédé comprenant le mélange de 5 à 25 parties en poids d'un additif pour un polymère et de 50 à 75 parties en poids d'un polymère choisi dans le groupe constitué de polyester, PA6, PA66, TPU et PPE ou d'un mélange de ceux-ci, dans lequel l'additif pour un polymère comprend :
A : un phosphinate de dialkyle, le phosphinate de dialkyle ayant la formule structurelle (I) suivante, 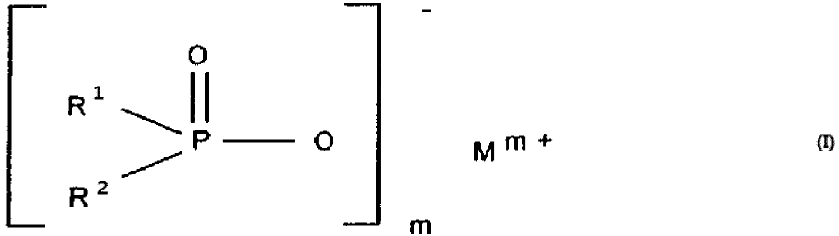
où R¹ et R² sont identiques ou différents, qui représentent H, un alkyle en C1 à C6 ou un aryle en C6 à C18 ;
M représente Al ; m vaut 3 ; et
B : un élément métallique calcium, où une teneur massique de l'élément métallique calcium dans un additif total est de 50 à 500 ppm,
où la résistance à la fatigue est déterminée selon le procédé de la description.
